# EUROPEAN PATENT APPLICATION

(11) **EP 4 597 659 A1**
(43) Date of publication of application: **06.08.2025**
(21) Application number: 25150484.1
(22) Date of filing: 07.01.2025
(51) Int. Cl.: H01M 10/04, H01M 10/0587, H01M 50/107, H01M 50/152, H01M 50/167, H01M 50/169, H01M 50/184, H01M 50/186, H01M 50/19, H01M 50/342, H01M 50/578

(54) **SECONDARY BATTERY**

(30) Priority: 02.02.2024 KR 20240016470
(71) Applicant: SAMSUNG SDI CO., LTD., Yongin-si, Gyeonggi-do 17084 (KR)
(72) Inventor: Kim, Dae Kyu, 17084 Yongin-si, Gyeonggi-do (KR); Kim, Ji Young, 17084 Yongin-si, Gyeonggi-do (KR)
(74) Representative: Gulde & Partner

(57) **Abstract**

A secondary battery including an electrode assembly 110 formed by winding a positive electrode sheet, a negative electrode sheet, and a separator interposed therebetween; a cylindrical can 130 configured to accommodate the electrode assembly; and a cap assembly 150 coupled to an open upper portion of the cylindrical can. The cap assembly includes a cap-up 151 having an upwardly protruding structure, a safety vent 153 disposed below the cap-up while surrounding an outer circumference of the cap-up, and a gasket 155 for sealing between the cap assembly and the cylindrical can. The gasket includes a side surface surrounding outer circumferential surfaces of the cap-up and the safety vent and includes an upper portion bent inwardly to cover a peripheral upper side of the cap-up.

## Description

### TECHNICAL FIELD

The present invention relates to a secondary battery and a method of manufacturing the same.

### BACKGROUND

Generally, a cylindrical secondary battery includes an electrode assembly, a cylindrical can accommodating the electrode assembly and an electrolyte, and a cap assembly coupled to an upper opening in the can to seal the can and to allow current generated in the electrode assembly to flow to an external device.

The information disclosed in this section is provided only for enhancement of understanding of the background of the disclosure and therefore it may contain information that does not form the related art.

### SUMMARY

The present invention is defined by the appended set of claims. Preferred embodiments are defined by the dependent claims. Embodiments provide a secondary battery and a method of manufacturing the same in which a cap assembly is coupled to a cylindrical can in a simple way and components thereof are structurally, accurately aligned.

A secondary battery according to an embodiment includes an electrode assembly formed by winding a positive electrode sheet, a negative electrode sheet, and a separator interposed therebetween, a cylindrical can configured to accommodate the electrode assembly, and a cap assembly coupled to an open upper portion of the cylindrical can, wherein the cap assembly includes a cap-up having an upwardly protruding structure, a safety vent disposed below the cap-up while surrounding an outer circumference of the cap-up, and a gasket configured to provide sealing between the cap assembly and the cylindrical can, and the gasket includes a side surface surrounding outer circumferential surfaces of the cap-up and the safety vent and includes an upper portion bent inwardly to cover a peripheral upper side of the cap-up.

In some examples, the upper portion of the gasket may be fused to the peripheral upper side of the cap-up, and the side surface and a lower portion of the gasket may not be fused to the cap-up.

In some examples, the thickness of the upper portion of the gasket may be 20% or less of the thickness of the side surface of the gasket.

In some examples, the thickness of the upper portion of the gasket may be 0.1 mm or greater and/or 1 mm or less.

In some examples, the thickness of the upper portion of the gasket may be less than the thickness of the lower portion of the gasket.

In some examples, the cap assembly further comprises a cap-down disposed between the safety vent and the electrode assembly.

In some examples, at least part of an upper portion of the cap-down is in contact with a center portion of a lower end of the safety vent, and a lower portion of the cap-down is connected to positive electrode sheet extending from the electrode assembly.

In some examples, the cap assembly further comprises a lower gasket disposed between the safety vent and the cap-down so that the safety vent and the cap-down are electrically insulated from each other except for a contact portion which a central protruding portion of the safety vent and the upper portion of the cap-down is contacted.

In some examples, the safety vent, the cap-up, and the gasket are provided in the form of an assembly in which the outer circumferential surfaces of the safety vent and the cap-up are in a state of being fixed by the gasket.

In some examples, the cap-up is configured to perform as a positive electrode terminal.

In some examples, the cap-up includes a plurality of holes formed therein to discharge gas.

In some examples, the cap-up has an upwardly convex shape and is provided with a flange portion, and the upper portion of the gasket is bent inwardly to fix and support the safety vent surrounding the flange portion of the cap-up.

A method of manufacturing the secondary battery described above includes placing the electrode assembly formed by winding the positive electrode sheet, the negative electrode sheet, and the separator interposed therebetween in the cylindrical can, preparing the cap assembly including the cap-up having an upwardly protruding structure, the safety vent disposed below the cap-up while surrounding an outer circumference of the cap-up, and the gasket configured to provide sealing between the cap assembly and the cylindrical can, and after preparing the cap assembly, coupling the cap assembly to the cylindrical can and crimping the cylindrical can.

In some examples, the preparing of the cap assembly may include placing the cap-up and the safety vent within the gasket so that the side surface of the gasket surrounds outer circumferential surfaces of the cap-up and the safety vent and bending the upper portion of the gasket protruding above the cap-up and the safety vent inwardly to press the safety vent surrounding an outer circumference of the cap-up and fusing the upper portion of the gasket to the cap-up, so that the cap-up and the safety vent are disposed in close contact with each other within the gasket.

In some examples, in the preparing of the cap assembly, pressure fusion may be performed on the entirety of a periphery of the upper portion of the gasket and the outer circumference of the cap-up.

In some examples, in the preparing of the cap assembly, pressure fusion may be performed on predetermined points on the periphery of the upper portion of the gasket, spaced apart from each other at regular intervals, and on the outer circumference of the cap-up.

In some examples, the crimping may be performed such that a crimping portion of the cylindrical can is pressed inwardly to contact an upper surface of the gasket while preventing an inner surface of the crimping portion from pressing the gasket.

### BRIEF DESCRIPTION OF THE DRAWINGS

The accompanying drawings, which are incorporated in this specification, illustrate exemplary embodiments and serve to further illustrate the technical ideas of the disclosure in conjunction with the detailed description of exemplary embodiments that follows, and the disclosure is not to be construed as limited to what is shown in such drawings. In the drawings:
FIG. 1 is a partial cross-sectional view of a conventional secondary battery;
FIG. 2 is a partial cross-sectional view of a secondary battery, according to an embodiment;
FIGs. 3A to 3C are conceptual views for explaining a process of coupling a cap assembly to a cylindrical can in the secondary battery shown in FIG. 2;
FIG. 4 is a conceptual view showing states of some components during a process of pressing a crimping portion of the cylindrical can inwardly;
FIG. 5A is a conceptual view for explaining a process of bending an upper portion of a gasket inwardly;
FIG. 5B is a conceptual view for explaining a process of fusing the upper portion of the gasket after the process shown in FIG. 5A; and
FIG. 6 is a conceptual view for explaining deformation of a component.

### DETAILED DESCRIPTION

Hereinafter, exemplary embodiments will be described in detail with reference to the accompanying drawings. Embodiments are provided to more fully illustrate the disclosure to a person having ordinary skill in the art. The following embodiments may be modified in various other forms, and the scope of the disclosure is not limited to the following embodiments. The embodiments are provided to make the disclosure more complete and to convey the idea of the disclosure fully to those skilled in the art.

In the accompanying drawings, the thickness or size of each layer is exaggerated for simplicity and clarity of description, and same reference symbols in the drawings refer to the same elements. As used herein, the term "and/or" includes any one of the enumerated items and any combination of one or more thereof. As used herein, the term "connected" refers not only to direct connection between members A and B but also to indirect connection between members A and B with member C interposed therebetween.

The terms used in the specification are intended to describe specific embodiments and are not intended to limit the disclosure. As used herein, singular forms may include plural forms, unless the context clearly indicates otherwise. As used herein, the terms "comprise" (or "include") and/or "comprising" (or "including") are intended to specify the presence of stated figures, numbers, steps, operations, members, elements, and/or groups thereof and do not exclude the presence or addition of one or more other figures, numbers, steps, operations, members, elements, and/or groups thereof.

While terms such as first and second are used herein to describe various members, parts, regions, layers, and/or portions, the members, the parts, the regions, the layers, and/or the portions are not to be limited by the terms. The terms are used only to distinguish one member, one part, one region, one layer, or one portion from another member, another part, another region, another layer, or another portion. Thus, a first member, a first part, a first region, a first layer, or a first portion hereinafter described may refer to a second member, a second part, a second region, a second layer, or a second portion without departing from the teachings of the disclosure.

Terms related to space, such as "beneath," "below," "lower," "above," and "upper," may be utilized to facilitate understanding of one element or feature shown in the drawings as different from another element or feature. The terms related to space are intended to facilitate understanding of the disclosure in various states of process or use and are not intended to limit the disclosure. For example, if an element or feature in a figure is inverted, an element or feature described as "beneath" or "below" becomes "above" or "upper." Thus, "beneath" is a concept that encompasses "above" or "below".

### Secondary Battery

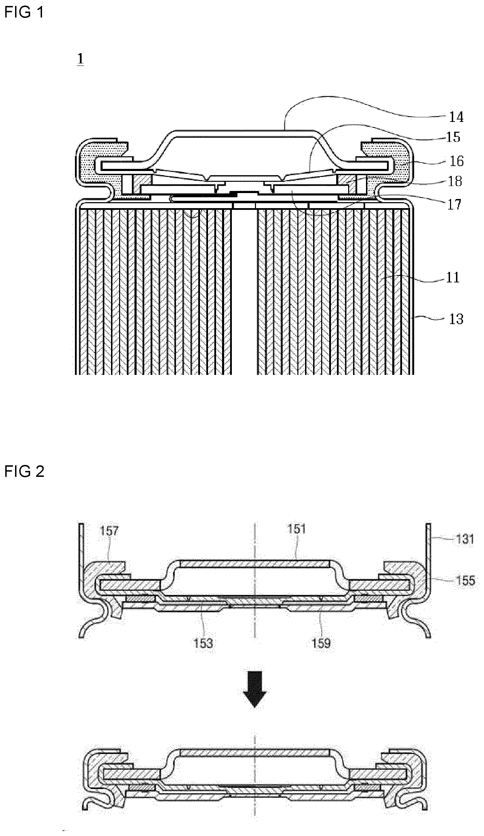

FIG. 1 is a partial cross-sectional view of a conventional secondary battery 1 including an electrode assembly 11. Referring to FIG. 1, the conventional secondary battery is assembled in such a manner that a gasket 16 is inserted into an opening in a cylindrical can 13, and components of a cap assembly are sequentially placed within the gasket 16 from above to below. For example, a cap-down 17, a lower gasket (e.g., insulator) 18, a safety vent 15, and a cap-up 14 are sequentially seated in an inner space defined within the gasket. Subsequently, a crimping portion of the cylindrical can 13 is pressed inwardly, so that a protruding upper portion of the gasket 16 is pressed inwardly and the gasket 16 presses an outer side of the safety vent 15 and a part of a flange portion of the cap-up 14 downward.

However, the conventional manufacturing method described in relation to FIG. 1 has a problem in that the process of sequentially coupling the components of the cap assembly to the cylindrical can is complicated, and thus, it is not easy to achieve complete sealing between the can assembly and the can. For example, during the manufacturing process, misalignment frequently occurs between the safety vent 15, the cap-up 14, and the gasket 16 surrounding these components.

In this regard, it is desirable to couple the cap assembly to the cylindrical can in a simple way and to achieve structurally accurate alignment of the components.

In some embodiments, a secondary battery has manufacturing characteristics in that a cap assembly in which a cap-up and a safety vent are assembled with a gasket is prepared in advance and then is coupled to a cylindrical can.

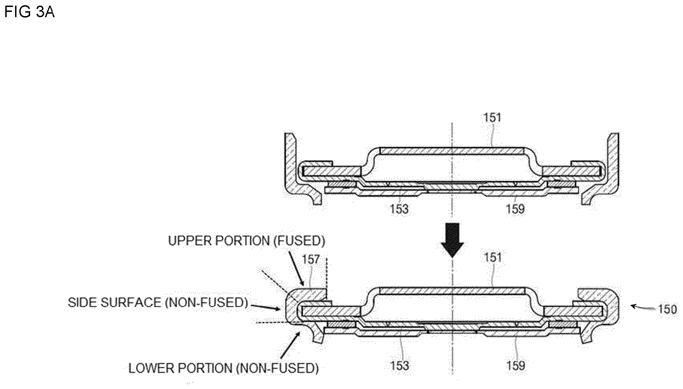

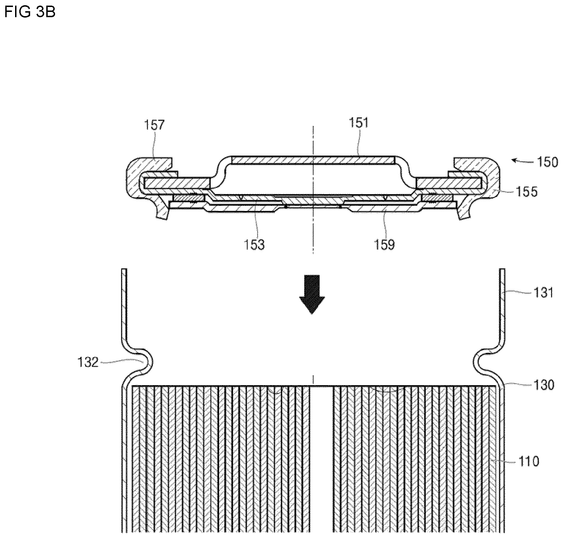

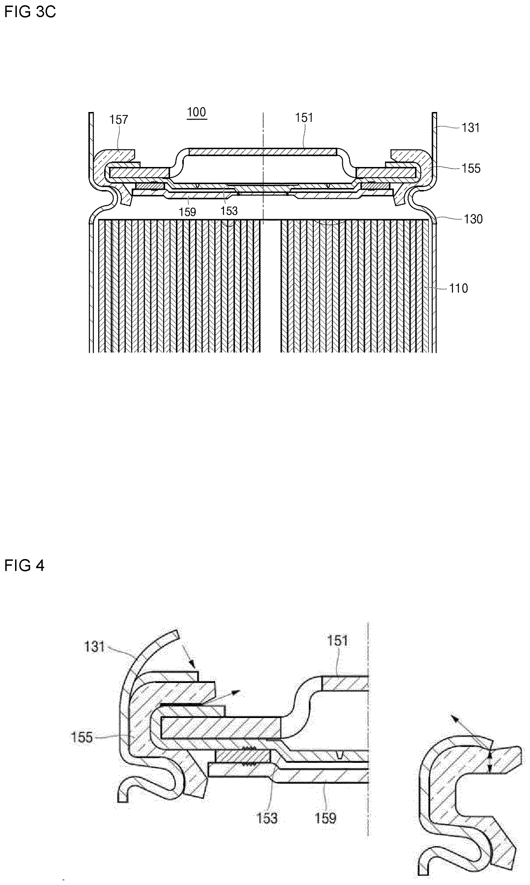

FIG. 2 is a partial cross-sectional view of a secondary battery according to an embodiment. FIG. 3A is a conceptual view for explaining a process of coupling a cap assembly to a cylindrical can in the secondary battery shown in FIG. 2. FIG. 3B is another conceptual view for explaining a process of coupling a cap assembly to a cylindrical can in the secondary battery shown in FIG. 2. FIG. 3C is another conceptual view for explaining a process of coupling a cap assembly to a cylindrical can in the secondary battery shown in FIG. 2. FIG. 4 is a conceptual view showing states of some components during a process of pressing a crimping portion of the cylindrical can inwardly. Hereinafter, a secondary battery, according to at least one embodiment, will be described with reference to these figures.

The secondary battery, according to an embodiment, includes an electrode assembly 110 formed by winding a positive electrode sheet, a negative electrode sheet, and a separator interposed therebetween. The electrode assembly 110 may be formed by sequentially stacking the positive electrode sheet, the separator, and the negative electrode sheet and then winding the stacked components.

The electrode assembly 110 may include a positive electrode tab electrically connected to the positive electrode sheet and a negative electrode tab electrically connected to the negative electrode sheet, and electrical energy of the electrode assembly 110 may be transmitted to the outside of the secondary battery 100 by these electrode tabs (e.g., the positive electrode tab and the negative electrode tab). The positive electrode tab may be connected to an uncoated portion of the positive electrode sheet, on which no active material layer is coated, and may extend to the outside of the wound electrode assembly 110. The negative electrode tab may be connected to an uncoated portion of the negative electrode sheet, on which no active material layer is coated, and may extend to the outside of the wound electrode assembly 110. The positive electrode tab extending to the outside may be fixed to a current interrupt device (CID, hereinafter referred to as a cap-down 159, as an example) through welding or the like, and the positive electrode sheet may be electrically connected to a cap assembly, which will be described later, via the positive electrode tab. Insulating plates may be provided at an upper portion and a lower portion of the electrode assembly 110 in an axial direction to prevent an electrical short circuit between the electrode assembly 110 and a cylindrical can 130.

The cylindrical can 130 accommodates (e.g., is configured to accommodate) the above-described electrode assembly 110 therein. The negative electrode tab of the electrode assembly 110 may be welded to the bottom surface of the can, so that the can may function as a negative electrode terminal. The cylindrical can 130 may be formed of stainless steel, aluminum (Al), or an equivalent thereto, but the embodiments are not limited thereto. The cylindrical can 130 may be provided with a bead formed to be inwardly convex at a position below the electrode assembly 110. The inner diameter of the bead may be set to be smaller than the outer diameter of the electrode assembly 110 in order to fix the electrode assembly 110 so that the electrode assembly 110 does not move in the cylindrical can 130. A crimping portion 131 bent inwardly may be formed along the edge of an opening in the cylindrical can 130. The crimping portion 131 may press a cap assembly 150, which will be described in detail later, thereby increasing clamping force.

The secondary battery further comprises a cap assembly 150, which is coupled to an open upper portion of the cylindrical can 130. The cap assembly 150 includes a cap-up 151 having an upwardly protruding structure, a safety vent 153 disposed below the cap-up 151 while surrounding (e.g., configured to surround) the outer circumference of the cap-up 151, and a gasket 155 for sealing (e.g., configured to provide sealing) between the cap assembly 150 and the cylindrical can 130. The cap assembly 150 may further include a cap-down 159 (current interrupt device (CID)) disposed between the safety vent 153 and the electrode assembly 110.

The cap-up 151 may function as a terminal of a first electrode of the electrode assembly 110. In this embodiment, the cap-up 151 may function as a positive electrode terminal. The cap-up 151 may have an upwardly convex shape and may be provided with a flange on the edge thereof. The cap-up 151 may include a plurality of holes formed therein so as to discharge gas.

If the pressure in the battery increases, the safety vent 153 can rupture to interrupt current or discharge gas. The safety vent 153 may be formed such that the center portion thereof protrudes in a downward direction and may include notches formed at predetermined positions. For example, if internal pressure increases due to generation of gas in the electrode assembly 110, the safety vent 153 may be inverted in shape such that the center portion thereof protrudes upwardly and may rupture at the notches. Gas may be discharged to the outside through the ruptured portions of the safety vent 153.

The cap-down 159 may be disposed below the safety vent 153 while being in contact with the center portion of the safety vent 153. At least part of an upper portion of the cap-down 159 may be in contact with the center portion of the lower end of the safety vent 153, and a lower portion of the cap-down 159 may be connected to an electrode lead (e.g., the positive electrode tab) extending from the electrode assembly 110. In a normal state, the downwardly protruding portion of the safety vent 153 may be in contact with the cap-down 159. If gas is generated in the secondary battery 100, and thus pressure in the battery increases, the shape of the safety vent 153 may be inverted (e.g., the protruding portion thereof may move toward the cap-up 151). As the safety vent 153 is deformed in this way, the safety vent 153 and the cap-down 159 may be separated from each other, and thus, electrical contact therebetween may be interrupted. Therefore, electric power transmission between the electrode assembly 110 and the safety vent 153 can be interrupted.

The gasket 155 may be a gasket for sealing between the opening in the cylindrical can 130 and the cap assembly 150. The gasket 155 may surround the outer circumferential surfaces of the cap-up 151 and the safety vent 153. The gasket may be surrounded by a portion of the cylindrical can defined from the opening in the cylindrical can 130 to the bead portion of the cylindrical can 130. The gasket 155 may be brought into close contact with the cap-up 151 and the safety vent 153 by the crimping portion 131 of the cylindrical can 130.

A lower gasket (e.g., insulator) may be disposed between the safety vent 153 and the cap-down 159 so that the safety vent 153 and the cap-down 159 are electrically insulated from each other except for a contact portion which the central protruding portion of the safety vent 153 and a portion of the cap-down 159 is contacted.

The cap assembly (e.g., as described above) may have a structure in which the gasket 155 surrounds the outer circumferential surfaces of the cap-up 151 and the safety vent 153. For example, the cap-up 151 and the safety vent 153 may be disposed in the space defined within the gasket 155, the side surface of the gasket 155 may surround the outer circumferential surfaces of the cap-up 151 and the safety vent 153, and an upper portion 157 of the side surface of the gasket 155 may protrude above the cap-up 151 and the safety vent 153. The protruding upper portion 157 may be bent inwardly to fix the cap-up 151 and the safety vent 153 by surrounding the side surfaces thereof. According to an embodiment, the protruding upper portion 157 may be bent inwardly to fix and support the safety vent 153 surrounding the outer circumference (e.g., flange) of the cap-up 151. For example, the gasket 155 may be coupled to the outer circumferential upper surface of the safety vent 153 through thermal fusion. In some examples, the upper portion may be bent inwardly to cover a peripheral upper side of the cap-up. Therefore, coupling of the gasket 155 to the cap-up 151 and the safety vent 153 may be enhanced, and thus, the cap-up 151 and the safety vent 153 may be highly, reliably fixed and supported. Such a fixing structure using fusion may improve coupling stability.

The safety vent 153, the cap-up 151, and the gasket 155 may be provided in the form of an assembly in which the outer circumferential portions of the safety vent 153 and the cap-up 151 are in a state of being fixed by the gasket 155. Such an assembly may be inserted into and disposed in the can and may be supported and fixed by the crimping portion 131 of the can. Some embodiments may employ a process of bending only the crimping portion 131 so that the crimping portion 131 merely contacts and supports the gasket 155 such that the safety vent 153 and the cap-up 151 are fixed in advance by the gasket 155, rather than by a process of bending the crimping portion 131 inwardly so that the upper portion 157 of the gasket 155 in an upright state is resultantly bent to fix the safety vent 153 and the cap-up 151. Therefore, it may not be necessary to press the gasket 155 during the crimping process.

As described above, because the upper portion of the gasket may be fused in advance to the peripheral upper side of the cap-up, crimping may be performed without resistance of the gasket. Therefore, force for crimping the upper portion of the gasket (e.g., crimping load) may be minimized, and thus, deformation of the components may be prevented or reduced. In some examples, the side surface and a lower portion of the gasket are not fused to the cap-up.

Further, because the crimping portion 131 does not need to compress the gasket 155, the crimping process may be simplified.

For example, in the secondary battery 100, according to an embodiment, the thickness of the upper portion 157 of the gasket 155 may be 20% or less of the thickness of the side surface of the gasket 155. As the thickness of the upper portion of the gasket increases, the components may be more greatly deformed due to fusion. Therefore, it may be preferable to design the thickness of the upper portion of the gasket to be small. In the case of a secondary battery mounted in electric vehicles, a cap assembly may be generally compressed at a compression ratio of 10% or lower. Therefore, although the thickness of the upper portion of the gasket is designed to be small, e.g., 20% or less of the thickness of the side surface of the gasket, a problem of deformation of the components may not occur during fusion of the upper portion of the gasket.

For example, the thickness of the upper portion 157 of the gasket 155 may be 0.1 mm or greater and/or 1 mm or less, preferably 0.1 mm or greater and/or 0.5 mm or less. 0.1 mm as the lower limit of the thickness of the upper portion of the gasket may be a minimum thickness enabling injection molding of the gasket 155. Without wishing to be bound by any particular theory, a reason why the upper limit of the thickness of the upper portion of the gasket is 1 mm is that, if the upper limit of the thickness of the upper portion of the gasket exceeds 1 mm, a difference between the overall height of the secondary battery (e.g., height from the bottom of the secondary battery to the upper surface of the cylindrical can) and the body height of the secondary battery (e.g., height from the bottom of the secondary battery to the upper surface of the cap-up) may exceed a predetermined desirable value.

The thickness of the upper portion 157 of the gasket 155 may be smaller than (e.g., less than) the thickness of the lower portion thereof. For example, the upper portion of the gasket may have the smallest thickness, the lower portion thereof may have the largest thickness, and the side surface thereof may have a thickness between the thickness of the upper portion thereof and the thickness of the lower portion thereof. Because the lower portion of the gasket can have a direct influence on sealing, the thickness thereof may preferably be greater than the thickness of the upper portion of the gasket. The thickness of the side surface of the gasket may, as an example, be 0.4 mm or greater in order to ensure stable seating of the CID. Further, if the thickness of the side surface of the gasket is 0.4 mm or greater, it may be possible to reduce or eliminate a space between the CID and the gasket.

### Secondary Battery Manufacturing Method

Hereinafter, a method of manufacturing a secondary battery according to at least one embodiment will be described.

First, a process of placing an electrode assembly 110 formed by winding a positive electrode sheet, a negative electrode sheet, and a separator interposed therebetween in a cylindrical can 130 is performed.

Subsequently, a process of preparing a cap assembly 150 is performed. The cap assembly 150 includes a cap-up 151 having an upwardly protruding structure, a safety vent 153 disposed below the cap-up 151 while surrounding the outer circumference of the cap-up 151, and a gasket 155 for sealing between the cap assembly 150 and the cylindrical can 130. The cap assembly 150 may further include a current interrupt device (CID, herein referred to as cap-down 159, in some examples) disposed between the safety vent 153 and the electrode assembly 110.

Subsequently, a process of coupling the cap assembly 150 prepared in advance to the cylindrical can 130 and crimping the cylindrical can 130 is performed. The cylindrical can 130 in this state may be provided with neither a beading portion 132 nor a crimping portion 131. The cap assembly 150 prepared in advance may be inserted into an open end of the cylindrical can 130 to be disposed above the electrode assembly 110 in the cylindrical can 130. After the cap assembly 150 is inserted into the cylindrical can 130, a beading portion 132 and a crimping portion 131 may be formed as portions of the cylindrical can 130.

The process of crimping the cylindrical can 130 may be performed such that the crimping portion 131 of the cylindrical can 130 is pressed inwardly to contact the upper surface of the gasket 155 while preventing the inner surface of the crimping portion 131 from pressing the gasket 155.

In a conventional process of assembling the secondary battery 100, the gasket 155 may be inserted into the opening in the cylindrical can 130, and the components of the cap assembly 150 may be sequentially placed within the gasket 155 from above to below. For example, the cap-down 159, the lower gasket (e.g., insulator), the safety vent 153, and the cap-up 151 may be sequentially seated in the inner space defined within the gasket 155. Subsequently, the crimping portion 131 of the cylindrical can 130 may be pressed inwardly, so that the protruding upper portion 157 of the gasket 155 may be pressed inwardly and the gasket 155 may press the outer side of the safety vent 153 and a part of the flange portion of the cap-up 151 downwardly. Because the crimping portion 131 of the cylindrical can 130 physically presses the gasket 155, the upper surface of the gasket 155 may be partially depressed downwardly.

In contrast, the method of assembling the secondary battery 100 according to some embodiments described herein may include preparing the cap assembly 150 in advance through a separate process, inserting the cap assembly 150 into the cylindrical can 130 so that the cap assembly 150 is disposed above the electrode assembly 110 in the cylindrical can 130, and forming the beading portion 132 and the crimping portion 131 of the cylindrical can 130 after inserting the cap assembly 150 into the cylindrical can 130.

In the process of preparing the cap assembly 150 described above, the cap-up 151 and the safety vent 153 are placed within the gasket 155 so that the side surface of the gasket 155 surrounds the outer circumferential surfaces of the cap-up 151 and the safety vent 153, and so that the upper portion 157 of the gasket 155, which may protrude above the cap-up 151 and the safety vent 153, is bent inwardly to press the safety vent 153 surrounding the outer circumference of the cap-up 151 and may then be fused to the cap-up 151, whereby the cap-up 151 and the safety vent 153 may be disposed in close contact with each other within the gasket 155.

In detail, the process of preparing the cap assembly 150 may include: preparing the gasket 155; placing the cap-up 151 and the safety vent 153 within the gasket 155 so that the side surface of the gasket 155 surrounds the outer circumferential surfaces of the cap-up 151 and the safety vent 153; and bending the upper portion 157 of the gasket 155, which protrudes above the cap-up 151 and the safety vent 153, inwardly to press the safety vent 153 surrounding the outer circumference of the cap-up 151; and fusing the upper portion 157 of the gasket 155 to the cap-up 151. Through this process, the cap assembly 150 in which the cap-up 151 and the safety vent 153 are disposed in close contact with each other within the gasket 155 may be prepared.

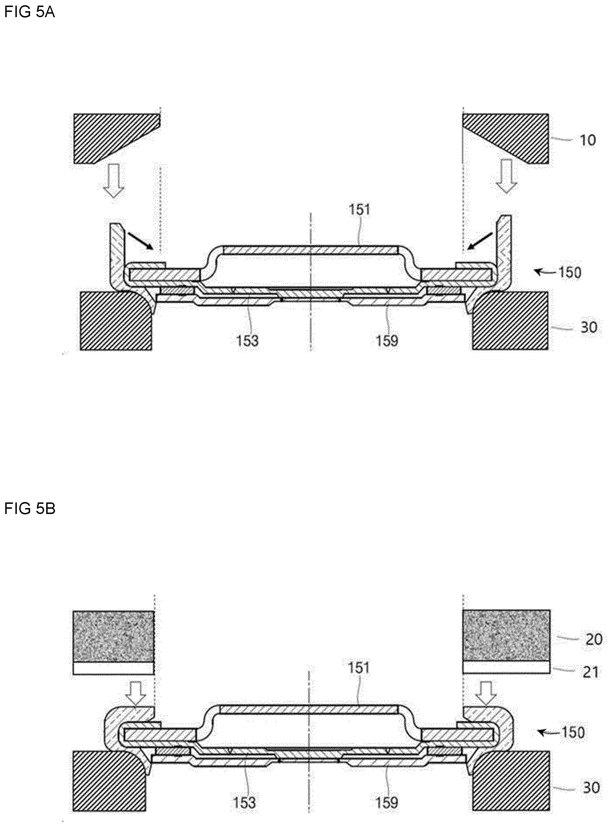

FIG. 5A is a conceptual view for explaining a process of bending the upper portion of the gasket inwardly. FIG. 5B is a conceptual view for explaining a process of fusing the upper portion of the gasket after the process shown in FIG. 5A is performed.

As shown in FIG. 5A, in a state in which the gasket 155, within which the cap-up 151 and the safety vent 153 are disposed, is fixedly supported on a jig 30 disposed thereunder. A bending tool 10 located above the jig 30 may be moved downwardly toward the gasket 155 to bend the upper portion of the gasket 155 inwardly. Subsequently, the bending tool 10 may be removed, and a heating jig 20 (e.g., as shown in FIG. 5B) may be placed above the gasket 155 and may then be moved downwardly toward the gasket 155 to fuse the upper portion of the gasket 155 to the cap-up 151. The heating jig 20 may be provided with a contact tip 21 on the lower surface thereof in order to prevent the high-temperature heating jig 20 from directly contacting the cap-up 151. The contact tip 21 may be made of ceramic or Teflon^{™}.

The entirety of the periphery of the upper portion 157 of the gasket 155 may be fused to the outer circumference of the cap-up 151. To this end, in the process of preparing the cap assembly 150, pressure fusion may be performed on the entirety of the periphery of the upper portion 157 of the gasket 155 and the outer circumference of the cap-up 151. The safety vent 153 and the cap-up 151 are not limited to being fused.

In other embodiments, some points on the periphery of the upper portion 157 of the gasket 155, spaced apart from each other at regular intervals, may be fused to the outer circumference of the cap-up 151. To this end, in the process of preparing the cap assembly 150, pressure fusion may be performed on predetermined points on the periphery of the upper portion 157 of the gasket 155, spaced apart from each other at regular intervals, and the outer circumference of the cap-up 151.

The process of preparing the cap assembly 150 may be performed prior to or simultaneously with the process of placing the electrode assembly 110 in the cylindrical can 130.

Hereinafter, experiments for demonstrating the effect of reducing deformation of the components by fusing the upper portion of the gasket and the effect of reducing deformation of the components by limiting the thickness of the upper portion of the gasket to the range of 0.1 to 1.0 mm will be described.

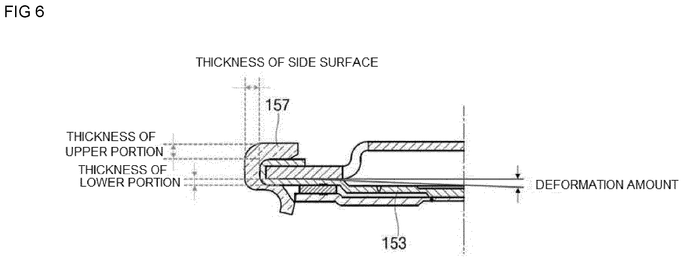

FIG. 6 is a conceptual view for explaining deformation of a component.

**TABLE 1**

| | Thickness of Upper Portion (mm) | Thickness of Side Surface (mm) | Thickness of Lower Portion (mm) | Deformed Dimension (mm) | Remarks |
|---|---|---|---|---|---|
| Comparative Example (Conventional) | 0.64 | 0.64 | 0.6 | -0.12 | Upper Portion Non-fused |
| Embodiment 1 | 0.1 | 0.64 | 0.6 | 0 | Upper Portion Fused |
| Embodiment 2 | 0.2 | 0.64 | 0.6 | 0 | Upper Portion Fused |
| Embodiment 3 | 0.3 | 0.64 | 0.6 | 0 | Upper Portion Fused |
| Embodiment 4 | 0.4 | 0.64 | 0.6 | -0.03 | Upper Portion Fused |
| Embodiment 5 | 0.5 | 0.64 | 0.6 | -0.04 | Upper Portion Fused |
| Embodiment 6 | 0.6 | 0.64 | 0.6 | -0.05 | Upper Portion Fused |
| Embodiment 7 | 0.7 | 0.64 | 0.6 | -0.06 | Upper Portion Fused |
| Embodiment 8 | 0.8 | 0.64 | 0.6 | -0.07 | Upper Portion Fused |
| Embodiment 9 | 0.9 | 0.64 | 0.6 | -0.08 | Upper Portion Fused |
| Embodiment 10 | 1.0 | 0.64 | 0.6 | -0.09 | Upper Portion Fused |
| Comparative Example 1 | 1.1 | 0.64 | 0.6 | -0.10 | Upper Portion Fused |

In Table 1 above, "Comparative Example (Conventional)" indicates a result of measuring a deformation amount of a component (e.g., as shown in FIG. 6) when fixing the cap assembly by pressing the crimping portion of the cylindrical can 130 inwardly so that the upper portion of the gasket 16 is pressed inwardly according to the related art (e.g., in reference to FIG. 1). The deformation amount of the component in "Comparative Example (Conventional)" corresponds to a deformation amount of the component generated when fusion is not performed on the upper portion of the gasket. It may be seen from the experimental result that the dimension of the component is changed by 0.12 mm when fusion is not performed on the upper portion of the gasket.

"Embodiment 1" to "Embodiment 10" correspond to exemplary embodiments in which the upper portion of the gasket is fused to the peripheral upper side of the cap-up and indicate results of measuring a deformation amount of a component while varying the thickness of the upper portion of the gasket within the range of 0.1 mm to 1.0 mm. It may be seen from the experimental results that, when fusion is performed on the upper portion of the gasket, deformation of the component is reduced compared to the related art in which fusion is not performed on the upper portion of the gasket. For example, it may be confirmed that the component is not deformed when the thickness of the upper portion of the gasket is in the range of 0.1 mm to 0.3 mm. It may also be confirmed that, although the component is deformed when the thickness of the upper portion of the gasket is in the range of 0.4 mm to 1.0 mm, the deformation amount of the component is less than that when fusion is not performed on the upper portion of the gasket.

As is apparent from the above description, embodiments may provide a secondary battery in which a cap assembly is coupled to a cylindrical can in a simple way.

In some embodiments, because an upper portion of a gasket is fused in advance to a peripheral upper side of a cap-up without the gasket being bent inwardly by being pressed by a crimping portion, crimping may be performed without resistance of the gasket. Therefore, crimping load may be reduced, and thus deformation of components may be minimized.

In some embodiments, because the crimping portion merely contacts and supports the gasket in a state in which a safety vent and the outer circumferential portion of the cap-up are fixed in advance by the gasket, a crimping process may be simplified.

The above are only example embodiments for implementing an exemplary secondary battery according to the disclosure. The disclosure is not limited to the above embodiments, and it is to be understood by those skilled in the art that various modifications can be made without departing from the scope of the disclosure as claimed in the following claims.

## Claims

1. A secondary battery (100) comprising:
an electrode assembly (110) comprising a positive electrode sheet, a negative electrode sheet, and a separator interposed therebetween;
a cylindrical can (130) configured to accommodate the electrode assembly (110); and
a cap assembly (150) coupled to an open upper portion of the cylindrical can (130),
wherein the cap assembly (150) comprises:
a cap-up (151) having an upwardly protruding structure;
a safety vent (153) disposed below the cap-up (151) while surrounding an outer circumference of the cap-up (151); and
a gasket (155) configured to provide sealing between the cap assembly (150) and the cylindrical can (130), wherein the gasket comprises a side surface surrounding outer circumferential surfaces of the cap-up (151) and the safety vent (153) and comprises an upper portion (157) bent inwardly to cover a peripheral upper side of the cap-up (151).

2. The secondary battery (100) as claimed in claim 1, wherein the upper portion of the gasket (155) is fused to the peripheral upper side of the cap-up (151), and wherein the side surface and a lower portion of the gasket (155) are not fused to the cap-up (151).

3. The secondary battery (100) as claimed in claim 1, wherein a thickness of the upper portion of the gasket (155) is 20% or less of a thickness of the side surface of the gasket (155).

4. The secondary battery (100) as claimed in claim 1, wherein a thickness of the upper portion of the gasket (155) is 0.1 mm or greater and/or 1 mm or less.

5. The secondary battery (100) as claimed in claim 1, wherein a thickness of the upper portion of the gasket (155) is less than a thickness of a lower portion of the gasket (155).

6. The secondary battery (100) as claimed in any one of the preceding claims, wherein the cap assembly (150) further comprises a cap-down (159) disposed between the safety vent (153) and the electrode assembly (110).

7. The secondary battery (100) as claimed in claim 6, wherein at least part of an upper portion of the cap-down (159) is in contact with a center portion of a lower end of the safety vent (153), and a lower portion of the cap-down (159) is connected to positive electrode sheet extending from the electrode assembly (110).

8. The secondary battery (100) as claimed in claim 6 or 7, wherein the cap assembly (150) further comprises a lower gasket disposed between the safety vent (153) and the cap-down (151) so that the safety vent (153) and the cap-down (159) are electrically insulated from each other except for a contact portion which a central protruding portion of the safety vent (153) and the upper portion of the cap-down (159) is contacted.

9. The secondary battery (100) as claimed in any one of the preceding claims, wherein the safety vent (153), the cap-up (151), and the gasket (155) are provided in the form of an assembly in which the outer circumferential surfaces of the safety vent (153) and the cap-up (151) are in a state of being fixed by the gasket (155).

10. The secondary battery as claimed in any one of the preceding claims, wherein the cap-up (151) is configured to perform as a positive electrode terminal, and/or wherein the cap-up (151) includes a plurality of holes formed therein to discharge gas.

11. The secondary battery as claimed in any one of the preceding claims, wherein the cap-up (151) has an upwardly convex shape and is provided with a flange portion, and wherein the upper portion (157) of the gasket (155) is bent inwardly to fix and support the safety vent (153) surrounding the flange portion of the cap-up (151).

12. A method of manufacturing a secondary battery (100), the secondary battery (100) comprising an electrode assembly (110) formed by winding a positive electrode sheet, a negative electrode sheet, and a separator interposed therebetween; a cylindrical can (130) configured to accommodate the electrode assembly (110); and a cap assembly (150) coupled to an open upper portion of the cylindrical can (130), wherein the cap assembly (150) comprises: a cap-up (151) having an upwardly protruding structure; a safety vent (153) disposed below the cap-up (151) while surrounding an outer circumference of the cap-up (151); and a gasket (155) configured to provide sealing between the cap assembly (150) and the cylindrical can (130), and wherein the gasket (155) comprises a side surface surrounding outer circumferential surfaces of the cap-up (151) and the safety vent (153) and an upper portion bent inwardly to cover a peripheral upper side of the cap-up (151), the method comprising:
placing the electrode assembly (110) formed by winding the positive electrode sheet, the negative electrode sheet, and the separator interposed therebetween in the cylindrical can (130);
preparing the cap assembly (150) comprising the cap-up (151) having an upwardly protruding structure, the safety vent (153) disposed below the cap-up (151) while surrounding an outer circumference of the cap-up (151), and the gasket (155) configured to provide sealing between the cap assembly (150) and the cylindrical can (130); and
after the preparing of the cap assembly (150), coupling the cap assembly (150) to the cylindrical can (130) and crimping the cylindrical can (130),
wherein the preparing of the cap assembly (150) comprises:
placing the cap-up (151) and the safety vent (153) within the gasket (155) so that the side surface of the gasket (155) surrounds outer circumferential surfaces of the cap-up (151) and the safety vent (153); and
bending the upper portion of the gasket (155) protruding above the cap-up (151) and the safety vent (153) inwardly to press the safety vent (153) surrounding an outer circumference of the cap-up (151) and fusing the upper portion of the gasket (155) to the cap-up (151), so that the cap-up (151) and the safety vent (153) are disposed in close contact with each other within the gasket (155).

13. The method as claimed in claim 12, wherein, in the preparing of the cap assembly (150), pressure fusion is performed on an entirety of a periphery of the upper portion of the gasket (155) and the outer circumference of the cap-up (151).

14. The method as claimed in claim 12, wherein, in the preparing of the cap assembly (150), pressure fusion is performed on predetermined points on a periphery of the upper portion of the gasket (155), spaced apart from each other at regular intervals, and on the outer circumference of the cap-up (151).

15. The method as claimed in claim 12, wherein the crimping is performed such that a crimping portion (131) of the cylindrical can (130) is pressed inwardly to contact an upper surface of the gasket (155) while preventing an inner surface of the crimping portion (131) from pressing the gasket (155).
